# EUROPEAN PATENT SPECIFICATION

(11) **EP 0 808 204 B1**
(45) Date of publication and mention of the grant of the patent: **02.12.1998**
(21) Application number: 96901893.6
(22) Date of filing: 07.02.1996
(51) Int. Cl.: B01D 25/176

(54) **FILTRATION APPARATUS**
FILTERVORRICHTUNG
APPAREIL DE FILTRATION

(30) Priority: 09.02.1995 GB 9502486
(43) Date of publication of application: 26.11.1997
(73) Proprietor: SCAPA GROUP PLC, Blackburn, Lancashire BB2 6AY (GB)
(72) Inventor: SCHROERS, Ernst-Dieter, D-4050 Monchengladbach 2 (DE)
(74) Representative: Goodwin, Mark
(86) International application number: GB9600248
(87) International publication number: WO9624423

(56) References cited:
- BE-A- 661 675
- DE-B- 1 003 185
- DE-U- 9 108 330
- FR-A- 2 643 826
- GB-A- 2 146 545

## Description

The present invention relates to filtration apparatus and more particularly to a filter plate and filter cloth arrangement for use in a filter press.

The term "filter cloth" used herein in relation to the invention refers to any filter media such as filter fabrics and other sheets of filter materials such as sintered polymers, metals or ceramics.

It is known to provide on filter presses and some other filter types, filter plates having a slurry feed hole in the filtering area. Both sides of such a filter plate are covered with a layer of filter material and each layer is provided with a feed hole. It is necessary to prevent the slurry from escaping between the filter layers and the filter plate in the region of the feed hole.

In one known arrangement a connecting device consisting essentially of a short cylinder having a flange at one end and threaded at the other is passed through the feed hole of one layer, through the hole in the filter plate and through the hole in the other layer. An annular ring is placed over the projecting cylindrical portion and a nut is screwed onto the threaded portion so pressing the layers of filter material between the flanges and the filter plate to provide a seal. This type of fixing is difficult and time consuming to assemble and often difficult to dismantle when the filter fabric has reached the end of its useful life.

In another known arrangement the two layers of filter material are interconnected at the feed hole by a cylindrical portion made from the filter cloth material which portion is stitched at one end to one layer and at the other end to the other layer to form a so called "barrel neck" filter cloth. The stitching operation is particularly time consuming and installing the filter cloth necessitates passing one layer of the cloth through the feed hole in the filter plate. Furthermore, if the filter cloth becomes hardened during use it is often impossible to remove the cloth without cutting. Thus removal for washing is prevented and the useful life of the filter cloth is reduced. Also if one side of the cloth becomes damaged the complete filter cloth must be disregarded.

In order to overcome the problem of stitching a known filter cloth (described in GB Patent Specification No. 1459099) of the "barrel neck" type utilises a hollow polymeric cylinder which is secured to the two layers of the filter cloth by heat bonding. However, the problems of fitting and removing the cloth still remain.

In another known arrangement described in German Published Patent Specification No. 2110860 a pair of filter cloths which cover the respective sides of a filter plate are each provided with a connecting device which is semi-circular in cross-section and which is made from an elastic deformable material. The device is secured to the filter cloth and when installed in the press the semi-circular portions of each device lay tightly over one another.

In practice the connections of this type have been found to be difficult to install because the semi-circular section must be deformed substantially. In addition some support is required for the connection to ensure adequate sealing between the two components.

GB 2088231 describes a filter arrangement comprising two filter cloths on opposite sides of a filter press connected by a barrel neck connection. The barrel neck connection comprises two annular members each of which is secured to one of the filter cloths. The ends of the annular members are constructed to connect releasably together with a snap fit. However, such an arrangement is difficult to manufacture in a cost effective manner in that the rings must be made to a close tolerance if they are to fit together correctly. Furthermore, if the rings are manufactured to such a close tolerance they are difficult to prise apart and are often damaged in doing so. Hence, they cannot be reused.

It is also known from FR-A-2643826 to provide a filter plate for a filter press, having a filter cloth on each face of the plate, wherein the filter plate not only has a central aperture, but is also provided with a number of projections on the faces of the plate. The filter cloth simply covers some of the projections, but others of the projections comprise bosses or caps fitted over the cloth, to secure the cloth to the filter plate. The filter cloth can be easily replaced due to its relatively few fixing points, however the cloth edge about the central aperture is unfixed and this can lead to edge leakage or loosening of the cloth due to back-pressure surges.

The present invention has been made from a consideration of these problems.

According to a first aspect of the present invention there is provided a method of connecting a filter cloth to a filter plate, said filter cloth having an aperture extending therethrough and said filter plate having a hole extending therethrough, said method comprising the step of providing a first co-operating formation integrally with or secured to the filter plate and a second co-operating formation integrally with or secured to the filter cloth characterised by bringing the first and second co-operating formations into engagement such that the aperture provided through the filter cloth is aligned with the hole through the filter plate and by the cooperating formations form a continuous seal around the filter cloth aperture so as to prevent leakage of the material being filtered.

The filter cloth to be secured to the other side of the filter plate is ideally secured to the filter plate in the same manner.

According to a second aspect of the present invention there is provided a filtration apparatus comprising at least one filter cloth operable to be connected to a filter plate, said filter cloth having an aperture extending therethrough and said filter plate having a hole extending therethrough, a first co-operating formation being provided integrally with or secured to the filter plate and a second co-operating formation being provided integrally with or secured to the filter cloth, characterised in that the first and second co-operating formations being brought into engagement such that the aperture provided through the filter cloth is aligned with the hole through the filter plate and in that the cooperating formations comprise a continuous seal around the filter cloth aperture so as to prevent leakage of the material being filtered.

The connector and method described above facilitate the easy mounting and dismounting of filter cloths on the filter plate without the need for a barrel neck connector. The assemblies of the invention are cheap to manufacture.

Any number of mating formations may be used. The co-operating formations ideally comprise a continuous seal around the filter cloth aperture so as to prevent leakage of the material being filtered. The continuous seal may have any shape. The co-operating formations may comprise a groove and mating projection. One of a pair of co-operating formations would most likely be provided integrally with the filter plate, whereas the other, co-operating formation would most likely be secured to the filter cloth, for example, by welding, adhesive or heat bonding of polymers.

The co-operating formations may be secured together simply by way of a press-fit, the projection being profiled so as to be captured by the groove. The ring profile should allow for ease of fit, but offer a high resistance to ring removal once fitted. Mating may be aided by bonding, for example, using adhesives.

In a preferred embodiment of the invention the connecting formations on the cloth comprise a ring which is ideally made of an elastomeric material preferably have at least a 70° A Shore Hardness.

In order that the present invention may be more readily understood specific embodiments thereof will now be described by way of example only with reference to the accompanying drawings in which:-
Fig.1 is a cross section through one filtration apparatus in accordance with the invention;
Fig.2 is a cross section through a second filtration apparatus in accordance with the invention; and
Fig.3 is a cross section through a third filtration apparatus in accordance with the invention.

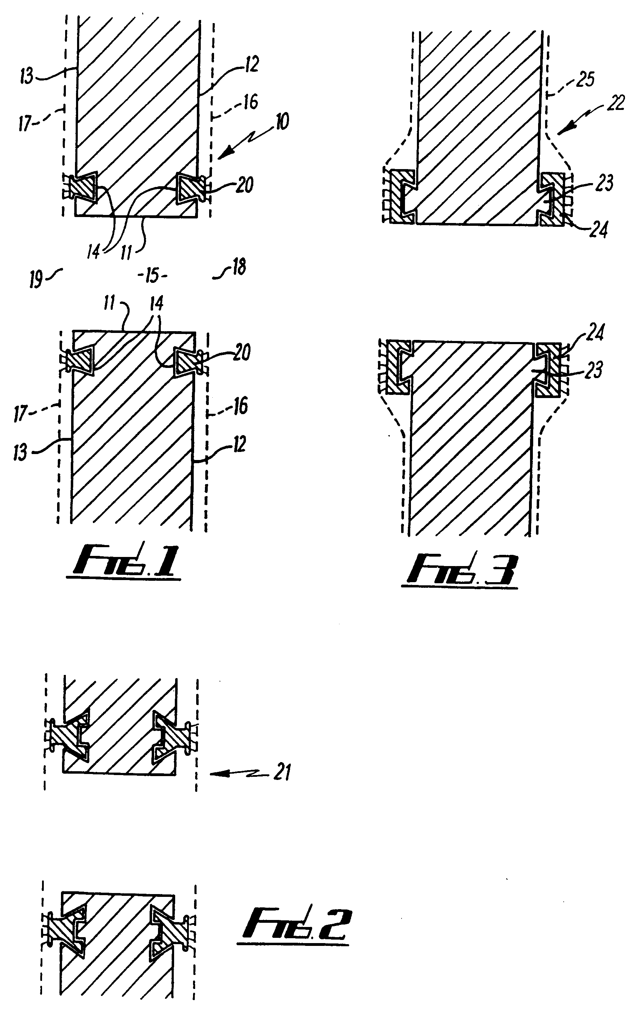

Referring to Fig.1 a filtration apparatus 10 for location in a chamber press filter comprises a filter plate 11 having major faces 12,13. The filter plate 11 is made from a polymer. A channel 15 extends through the filter plate. A tapered continuous annular groove 14 is provided on each face 12,13. A filter cloth 16,17 is located adjacent each face 12,13. Each filter cloth 16,17 has an aperture 18,19 therethrough, the aperture being in register with the channel 15. A ring 20 of elastomeric material is welded to each filter cloth, a ring 20 extending around each aperture 18,19. The rings 20 are tapered and are operative to fit into the grooves 14 with a snug fit. The profiling of the groove 14 and ring 20 is selected so as to capture the ring 20 in the groove 14.

Fig.2 shows a second filtration apparatus 21 similar to that illustrated in Fig.1 except in that a differently shaped groove and ring attachment is used.

Fig.3 shows a further filtration apparatus 22 in which a tapered projection 23 extends from the filter plate. The tapered projection 23 engages a grooved ring 24 which is welded to the filter cloth 25 around the aperture through the filter cloth.

## Claims

1. A method of connecting filter cloth (16 or 17) to a filter plate (12), said filter cloth (16, 17) having an aperture (18, 19) extending therethrough and said filter plate (12) having a hole (15) extending therethrough, said method comprising the step of providing a first co-operating formation (14) integrally with or secured to the filter plate (12) and a second cooperating formation (20) integrally with or secured to the filter cloth (16, 17) characterised by bringing the first and second co-operating formations (14, 20) into engagement such that the aperture (18, 19) provided through the filter cloth (16, 17) is aligned with the hole (15) through the filter plate (12) and in that the co-operating formations (14, 20) form a continuous seal around the filter cloth aperture (18, 19) so as to prevent leakage of the material being filtered.

2. A method as claimed in claim 1, characterised in that the co-operating formations (14, 20) comprise a groove (14) and mating projection (20).

3. A method as claimed in any preceding claim, characterised in that one of said co-operating formations (14) is provided integrally with the filter plate (12).

4. A method as claimed in claim 3, characterised in that the other of said co-operating formations (20) is secured to the filter cloth (16, 17).

5. A method as claimed in any of claims 2 to 4, characterised in that the projection (20) is profiled so as to be captured by the groove (14).

6. A method as claimed in any of claims 2 to 5, characterised in that mating of the projection (20) in the groove (14) is aided by bonding.

7. A method as claimed in any of claims 2 to 6, characterised in that a projection (20) is provided on the cloth (16, 17), the projection (20) comprising a ring of elastomeric material.

8. A filtration apparatus comprising at least one filter cloth (16, 17) operable to be connected to a filter plate (12), said filter cloth (16, 17) having an aperture (18, 19) extending therethrough and said filter plate (12) having a hole (15) extending therethrough, a first co-operating formation (14) being provided integrally with or secured to the filter plate (12) and a second co-operating formation (20) being provided integrally with or secured to the filter cloth (16, 17), characterised in that the first and second co-operating formations (14, 20) are brought into engagement such that the aperture (18, 19) provided through the filter cloth (16, 17) is aligned with the hole (15) through the filter plate (12) and in that the cooperating formations (14, 20) comprise a continuous seal around the filter cloth aperture (18, 19) so as to prevent leakage of the material being filtered.

9. A filtration apparatus as claimed in claim 8, characterised in that the co-operating formations (14, 20) comprise a groove (14) and mating projection (20).

10. A filtration apparatus as claimed in any of claims 8 to 9, characterised in that one (14) of a pair of co-operating formations (14, 20) is provided integrally with the filter plate (12).

11. A filtration apparatus as claimed in claim 10, characterised in that the other (20) of the pair of co-operating formations is secured to the filter cloth (16, 17).

12. A filtration apparatus as claimed in any of claims 9 to 11, characterised in that the projection (20) is profiled so as to be captured by the groove (14).

13. A filtration apparatus as claimed in any of claims 8 to 12, characterised in that mating of the projection (20) in the groove (14) is aided by bonding.

## Patentansprüche

1. Verfahren zum Verbinden eines Filtertuches (16 oder 17) mit einer Filterplatte (12), wobei das Filtertuch (16, 17) eine sich durch dieses erstreckende Öffnung (18, 19) und die Filterplatte (12) ein sich durch diese erstreckendes Loch (15) aufweist, und wobei das Verfahren den Verfahrensschritt aufweist, eine erste ineinandergreifende Ausbildung (14) vorzusehen, die einstückig mit der Filterplatte (12) ausgebildet oder an ihr befestigt ist, sowie eine zweite ineinandergreifende Ausbildung (20), die einstückig mit dem Filtertuch (16, 17) ausgebildet oder an ihm befestigt ist,
dadurch gekennzeichnet, daß die erste und die zweite ineinandergreifende Ausbildung (14, 20) in eine solche Eingriffslage gebracht werden, daß die in dem Filtertuch (16, 17) ausgebildete Öffnung (18, 19) zu dem in der Filterplatte (12) vorhandenen Loch (15) ausgerichtet ist, und daß die ineinandergreifenden Ausbildungen (14, 20) eine durchgehende Abdichtung der Filtertuchöffnung (18, 19) bilden, um ein Austreten des gefilterten Materials zu verhindern.

2. Verfahren nach Anspruch 1,
dadurch gekennzeichnet, daß die ineinandergreifenden Ausbildungen (14, 20) eine Ausnehmung (14) und einen passenden Vorsprung (20) aufweisen.

3. Verfahren nach einem vorhergehenden Anspruch,
dadurch gekennzeichnet, daß eine der ineinandergreifenden Ausbildungen (14) einstückig mit der Filterplatte (12) ausgebildet ist.

4. Verfahren nach Anspruch 3,
dadurch gekennzeichnet, daß die andere der ineinandergreifenden Ausbildungen (20) an dem Filtertuch (16, 17) befestigt ist.

5. Verfahren nach einem der Ansprüche 2 bis 4,
dadurch gekennzeichnet, daß der Vorsprung (20) derart profiliert ist, daß er von der Ausnehmung (14) aufgenommen wird.

6. Verfahren nach einem der Ansprüche 2 bis 5,
dadurch gekennzeichnet, daß das Zusammenfügen des Vorsprunges (20) mit der Ausnehmung (14) durch Kleben unterstützt wird.

7. Verfahren nach einem der Ansprüche 2 bis 6,
dadurch gekennzeichnet, daß ein Vorsprung (20) an dem Tuch (16, 17) angebracht ist, wobei der Vorsprung (20) einen Ring aus einem elastomeren Material umfaßt.

8. Filtervorrichtung mit mindestens einem Filtertuch (16, 17), das mit einer Filterplatte (12) zu verbinden ist, wobei das Filtertuch (16, 17) eine sich durch dieses erstreckende Öffnung (18, 19) und die Filterplatte (12) ein sich durch diese erstreckendes Loch (15) aufweist, und wobei eine erste ineinandergreifende Ausbildung (14) einstückig mit der Filterplatte (12) ausgebildet oder an ihr befestigt ist und eine zweite ineinandergreifende Ausbildung (20) einstückig mit dem Filtertuch (16, 17) ausgebildet oder an ihm befestigt ist,
dadurch gekennzeichnet, daß die erste und die zweite ineinandergreifende Ausbildung (14, 20) in eine solche Eingriffslage gebracht werden, daß die in dem Filtertuch (16, 17) ausgebildete Öffnung (18, 19) zu dem in der Filterplatte (12) vorhandenen Loch (15) ausgerichtet ist, und daß die ineinandergreifenden Ausbildungen (14, 20) eine durchgehende Abdichtung der Filtertuchöffnung (18, 19) bilden, um ein Austreten des gefilterten Materials zu verhindern.

9. Filtervorrichtung nach Anspruch 8,
dadurch gekennzeichnet, daß die ineinandergreifenden Ausbildungen (14, 20) eine Ausnehmung (14) und einen passenden Vorsprung (20) aufweisen.

10. Filtervorrichtung nach einem der Ansprüche 8 bis 9,
dadurch gekennzeichnet, daß eine Ausbildung (14) von zwei ineinandergreifenden Ausbildungen (14, 20) einstückig mit der Filterplatte (12) ausgebildet ist.

11. Filtervorrichtung nach Anspruch 10,
dadurch gekennzeichnet, daß die andere Ausbildung (20) der beiden ineinandergreifenden Ausbildungen an dem Filtertuch (16, 17) befestigt ist.

12. Filtervorrichtung nach einem der Ansprüche 9 bis 11,
dadurch gekennzeichnet, daß der Vorsprung (20) derart profiliert ist, daß er von der Ausnehmung (14) aufgenommen wird.

13. Filtervorrichtung nach einem der Ansprüche 8 bis 12,
dadurch gekennzeichnet, daß das Zusammenfügen des Vorsprunges (20) mit der Ausnehmung (14) durch Kleben unterstützt wird.

## Revendications

1. Procédé pour relier une toile de filtre (16 ou 17) à une plaque de filtre (12), ladite toile de filtre (16 ou 17) comprenant une ouverture (18, 19) s'étendant au travers de celle-ci et ladite plaque de filtre (12) ayant un orifice (15) s'étendant au travers de celle-ci, ledit procédé comprenant l'étape consistant à fournir une première structure de coopération (14) venue de matière avec ou fixée sur la plaque de filtre (12) et une deuxième structure de coopération (20) venue de matière ou fixée sur la toile de filtre (16, 17), caractérisé en ce qu'il comprend une étape consistant à amener les première et deuxième structures de coopération (14, 20) en engagement de sorte que l'ouverture (18, 19) prévue au travers de la toile de filtre (16, 17) est alignée avec l'orifice (15) au travers de la plaque de filtre (12), et en ce que les structures de coopération (14, 20) forment un joint continu autour de l'ouverture de toile de filtre (18, 19) de manière à éviter une fuite du matériau qui est filtré.

2. Procédé selon la revendication 1, caractérisé en ce que les structures de coopération (14, 20) comprennent une gorge (14) et une saillie conjuguée (20).

3. Procédé selon l'une quelconque des revendications précédentes, caractérisé en ce que l'une desdites structures de coopération (14) est réalisée venue de matière avec la plaque de filtre (12).

4. Procédé selon la revendication 3, caractérisé en ce que l'autre desdites structures de coopération (20) est fixée sur la toile de filtre (16, 17).

5. Procédé selon l'une quelconque des revendications 2 à 4, caractérisé en ce que la saillie (20) est profilée de manière à être retenue prisonnière par la gorge (14).

6. Procédé selon l'une quelconque des revendications 2 à 5, caractérisé en ce que la conjugaison de la saillie (20) dans la gorge (14) est facilitée par liaison.

7. Procédé selon l'une quelconque des revendications 2 à 6, caractérisé en ce qu'une saillie (20) est prévue sur la toile (16, 17), la saillie (20) comprenant un anneau de matériau élastomère.

8. Appareil de filtration comprenant au moins une toile de filtre (16, 17) utilisable pour être reliée à une plaque de filtre (12), ladite toile de filtre (16, 17) ayant une ouverture (18, 19) s'étendant au travers de celle-ci et ladite plaque de filtre (12) ayant un orifice (15) s'étendant au travers de celle-ci, une première structure de coopération (14) étant prévue venue de matière avec ou fixée sur la plaque de filtre (12) et une deuxième structure de coopération (20) étant prévue venue de matière avec ou fixée sur la toile de filtre (16, 17), caractérisé en ce que les première et deuxième structures de coopération (14, 20) sont amenées en engagement de sorte que l'ouverture (18, 19) prévue au travers de la toile de filtre (16, 17) est alignée avec l'orifice (15) au travers de la plaque de filtre (12) et en ce que les structures de coopération (14, 20) comprennent un joint continu autour de l'ouverture de toile (18, 19) de manière à éviter une fuite du matériau qui est filtré.

9. Appareil selon la revendication 8, caractérisé en ce que les structures de coopération (14, 20) comprennent une fente (14) et une saillie conjuguée (20).

10. Appareil selon l'une quelconque des revendications 8 à 9, caractérisé en ce qu'une structure (14) d'une paire de structures de coopération (14, 20) est réalisée venue de matière avec la plaque de filtre (12).

11. Appareil de filtration selon la revendication 10, caractérisé en ce que l'autre structure (20) de la paire de structures de coopération est fixée sur la toile de filtre (16, 17).

12. Appareil selon l'une quelconque des revendications 9 à 11, caractérisé en ce que la saillie (20) est profilée de manière à être retenue prisonnière par la gorge (14).

13. Appareil selon l'une des revendications 8 à 12, caractérisé en ce que la conjugaison de la saillie (20) dans la gorge (14) est facilitée par liaison.
